# EUROPEAN PATENT APPLICATION

(11) **EP 4 475 444 A1**
(43) Date of publication of application: **11.12.2024**
(21) Application number: 24178353.9
(22) Date of filing: 28.05.2024
(51) Int. Cl.: H04B 1/10, H04B 1/16

(54) **IRREGULAR CHANNEL BANDWIDTH SUPPORT MECHANISM**

(30) Priority: 09.06.2023 GB 202308636
(71) Applicant: Nokia Technologies Oy, 02610 Espoo (FI)
(72) Inventor: BLÜCHER BRINK, Stig, Aalborg (DK); NIELSEN, Kim, Storvorde (DK); DHERE, Amol, Gistrup (DK)
(74) Representative: Nokia EPO representatives

(57) **Abstract**

Example embodiments of the present disclosure relate to a terminal device, a method, an apparatus and a computer readable storage medium for irregular channel bandwidth support mechanism. In some embodiments, a terminal device may receive s configuration of irregular channel bandwidth from a network device and further configure multiple bandwidths for multiple filters based on the configuration. In some embodiments, at least two of the multiple bandwidths are different. As such, the filter configurations at the terminal device may support the irregular channel bandwidths, even when the terminal device does not update the analog filters in hardware.

## Description

### FIELD

Example embodiments of the present disclosure generally relate to the field of telecommunication and in particular, to a terminal device, a method, an apparatus and a computer readable storage medium for irregular channel bandwidth (CBW) support mechanism.

### BACKGROUND

Irregular channel bandwidth has been proposed for providing bandwidth flexibility, where an irregular channel bandwidth may be larger (or wider) than or smaller (or narrower) than a standard channel bandwidth.

An efficient bandwidth utilization may be achieved through definition and agreements to introduce the irregular channel bandwidth sizes. However, further study is stilled needed, e.g., on how to apply the irregular channel bandwidth.

### SUMMARY

In general, example embodiments of the present disclosure provide a solution for irregular channel bandwidth support mechanism.

In a first aspect, there is provided a terminal device. The terminal device comprises at least one processor and at least one memory storing instructions that, when executed by the at least one processor, cause the terminal device at least to: receive, from a network device, a configuration of an irregular channel bandwidth; and configure a plurality of bandwidths for a plurality of filters based on the irregular channel bandwidth, wherein at least two of the plurality of bandwidths for the plurality of filters are different.

In a second aspect, there is provided a method performed by a terminal device. The method comprises: receiving, at a terminal device from a network device, a configuration of an irregular channel bandwidth; and configuring, at the terminal device, a plurality of bandwidths for a plurality of filters based on the irregular channel bandwidth, wherein at least two of the plurality of bandwidths for the plurality of filters are different.

In a third aspect, there is provided an apparatus. The apparatus comprises: means for receiving, at a terminal device from a network device, a configuration of an irregular channel bandwidth; and means for configuring, at the terminal device, a plurality of bandwidths for a plurality of filters based on the irregular channel bandwidth, wherein at least two of the plurality of bandwidths for the plurality of filters are different.

In a fourth aspect, there is provided a terminal device. The terminal device comprises: receiving circuitry configured to receive, from a network device, a configuration of an irregular channel bandwidth; and configuring circuitry configured to configure a plurality of bandwidths for a plurality of filters based on the irregular channel bandwidth, wherein at least two of the plurality of bandwidths for the plurality of filters are different.

In a fifth aspect, there is provided a non-transitory computer readable medium comprising program instructions for causing an apparatus to perform at least: receiving, at a terminal device from a network device, a configuration of an irregular channel bandwidth; and configuring, at the terminal device, a plurality of bandwidths for a plurality of filters based on the irregular channel bandwidth, wherein at least two of the plurality of bandwidths for the plurality of filters are different.

In a sixth aspect, there is provided a computer program comprising instructions, which, when executed by an apparatus, cause the apparatus at least to: receive, at a terminal device from a network device, a configuration of an irregular channel bandwidth; and configure, at the terminal device, a plurality of bandwidths for a plurality of filters based on the irregular channel bandwidth, wherein at least two of the plurality of bandwidths for the plurality of filters are different.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1 illustrates an example of a network environment in which some example embodiments of the present disclosure may be implemented;
FIG. 2 illustrates a schematic graph of a comparison of different approaches investigated in 3GPP for supporting the irregular bandwidth;
FIG. 3A illustrates a schematic graph of the receiver architecture at a UE, with an analogue baseband (ABB) module and a digital baseband (DBB) module;
FIGS. 3B and 3C illustrate example implementations of the ABB and the DBB respectively;
FIG. 4 illustrates an example of a process flow in accordance with some example embodiments of the present disclosure;
FIG. 5 illustrates an example of a process flow of signalling in accordance with some example embodiments of the present disclosure;
FIGS. 6A and 6B illustrate how a transceiver front-end with the receive chains may receive an irregular channel bandwidth without and with an adjacent channel interference respectively in accordance with some example embodiments of the present disclosure;
FIG. 7A illustrates an example of the highest amount of expected attenuation of the outer spectrum part of the wanted signal along with the increased suppression of the adjacent channel interference in accordance with some example embodiments of the present disclosure;
FIG. 7B illustrates an example of the impact of the filter attenuation at the spectrum edges of the wanted signal in accordance with some example embodiments of the present disclosure;
FIG. 8 illustrates a flowchart of a method implemented at a terminal device in accordance with some example embodiments of the present disclosure;
FIG. 9 illustrates a simplified block diagram of a device that is suitable for implementing some example embodiments of the present disclosure; and
FIG. 10 illustrates a block diagram of an example of a computer readable medium in accordance with some example embodiments of the present disclosure.

Throughout the drawings, the same or similar reference numerals represent the same or similar elements.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), New Radio (NR), Wideband Code Division Multiple Access (WCDMA), High-Speed Packet Access (HSPA), Narrow Band Internet of Things (NB-IoT) and so on. Furthermore, the communications in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio (NR) NB (also referred to as a gNB), a Remote Radio Unit (RRU), a radio header (RH), a remote radio head (RRH), an integrated access and backhaul (IAB) node, a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a machine type communication (MTC) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In case of an irregular channel bandwidth, applying the next smaller standard channel bandwidth filter configuration may attenuate the outer subcarrier parts of the wanted signal to a level that prohibits adequate demodulation, causing an undesired drop in throughput. In case of an irregular channel bandwidth, using the next wider standard channel bandwidth filter configuration may cause clipping/saturation and interference of the wanted signal due to the adjacent channel leakage, causing an undesired degradation in signal-to-noise-and-distortion ratio (SINAD) of the baseband signal of the UE. Accordingly, this may ultimately lead to not meeting the 3GPP adjacent channel selectivity (ACS) requirements, where the ACS requirements indicate that a UE should be able to meet 95% of the target throughput of the reference quadrature phase shift keying (QPSK) level when the adjacent interferer is 33 dB higher than the wanted signal. Therefore, it is to be further studied that how to support irregular channel bandwidth, e.g., in existing UE designs without changes to the analogue filter implementation.

Example embodiments of the present disclosure provide a solution for irregular channel bandwidth support mechanism. In some embodiments, a terminal device may receive configuration of irregular channel bandwidth from a network device and further configure multiple bandwidths for multiple filters based on the configuration. In some embodiments, at least two of the multiple bandwidths are different. Principles and some example embodiments of the present disclosure will be described in detail below with reference to the accompanying drawings.

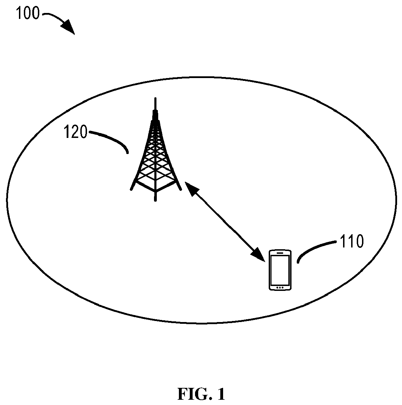

FIG. 1 illustrates an example of a network environment 100 in which some example embodiments of the present disclosure may be implemented. The environment 100, which may be a part of a communication network, comprises a terminal device 110 and a network device 120. The network environment 100 may also be called as a network system, a communication environment, a communication network, a communication system, or the like, the present disclosure does not limit this aspect.

The environment 100 may comprise any suitable number of devices and cells. In the environment 100, the network device 120 can provide services to the terminal device 110, and the network device 120 and the terminal device 110 may communicate data and control information with each other. In some embodiments, the network device 120 and the terminal device 110 may communicate with direct links/channels.

In the environment 100, a link from the network device 120 to the terminal device 110 is referred to as a downlink (DL), while a link from the terminal device 110 to the network device 120 is referred to as an uplink (UL). In downlink, the network device 120 is a transmitting (TX) device (or a transmitter) and the terminal device 110 is a receiving (RX) device (or a receiver). In uplink, the terminal device 110 is a transmitting TX device (or a transmitter) and the network device 120 is a RX device (or a receiver). It is to be understood that the network device 120 may provide one or more serving cells. In some embodiments, the network device 120 can provide multiple cells.

Communications in the network environment 100 may be implemented according to any proper communication protocol(s), comprising, but not limited to, cellular communication protocols of the first generation (1G), the second generation (2G), the third generation (3G), the fourth generation (4G), the fifth generation (1G) and the sixth generation (6G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

It is to be understood that the numbers of devices (i.e., the terminal device 110 and the network device 120) and their connection relationships and types shown in FIG. 1 are only for the purpose of illustration without suggesting any limitation. For example, the environment 100 may include any suitable numbers of devices adapted for implementing embodiments of the present disclosure. For example, while FIG. 1 depicts the terminal device 110 as a mobile phone; the terminal device 110 may be any type of user equipment.

It is generally up to the UE implementation how the analogue and digital filters in the receiver architecture are combined. Typically, the receiver design aims for obtaining an optimal compromise between blocking/ACS performance and reference sensitivity/max throughput performance for a given standard channel bandwidths, e.g., from 5MHz to 100MHz in case of frequency range 1 (FR1).

From 3GPP 38.101-1 the baseline ACS requirements are conducted, so that a UE should be able to meet 95% of the target throughput of the reference quadrature phase shift keying (QPSK) level when the adjacent interferer is 33 dB higher than the wanted signal.

The ACS requirements may be very challenging to meet without relaxations for non-standard channel bandwidths (e.g., 6 MHz or 7 MHz) where the channel bandwidth is relatively small compared to the next larger standard bandwidth (e.g., 10 MHz). In such an example scenario, the wider analogue 10 MHz channel filter cannot protect against adjacent interferers when the non-standard channel bandwidth spectrum is narrower than the channel filter and adjacent interferers are present on one or both sides of the wanted signal.

If a blocking signal is present, where the power of the adjacent interferer is 33 dB higher than the wanted signal, this will severely degrade the SNR and increase the probability of compression and clipping of the baseband Analog-to-Digital converter (ADC).

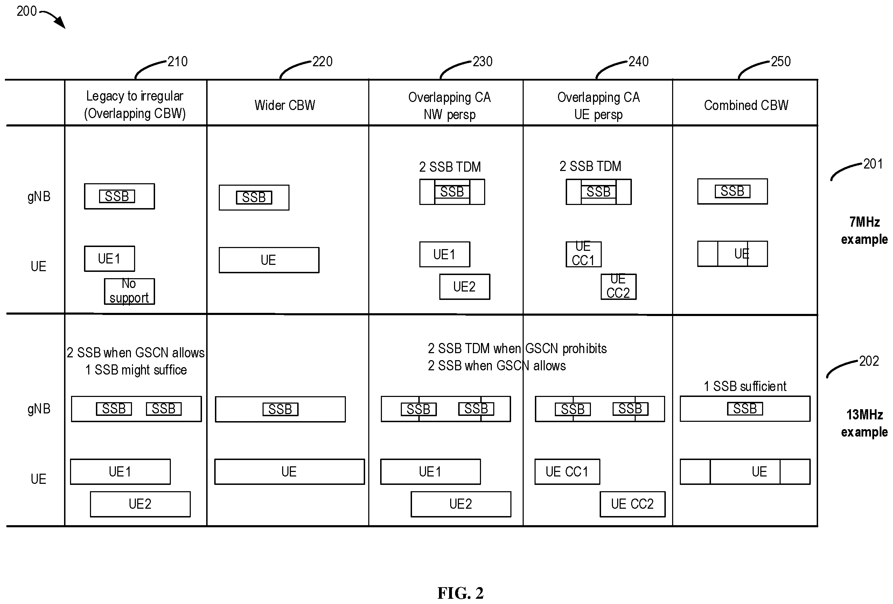

There may be different approaches for supporting the irregular bandwidths. FIG. 2 illustrates a schematic graph of a comparison 200 of different approaches investigated in 3GPP for supporting the irregular bandwidth. The different proposals of utilizing an irregular bandwidth are shown in the columns 220-250 following the column 210 which shows how a legacy UE may fit into an irregular channel bandwidth.

There are two examples of irregular channel bandwidths shown in FIG. 2, i.e., 7MHz at 201 and 13 MHz at 202. For ease of description, the example of 7MHz will be discussed in detail below.

Column 210 shows how a legacy UE may support an irregular channel bandwidth. The UE would most likely only support the configuration of the first/lower section of the spectrum leaving no support to the upper spectrum, which means there's no benefit to the UE of the new feature. This is due to grid mismatch of the upper part of the irregular channel bandwidth.

Column 220 shows that a UE may support the irregular bandwidth through the next wider channel bandwidth, i.e., 10 MHz for 6/7MHz and 15 MHz for 11/12/13MHz. The UE would suffer from degraded sensitivity using a wider channel bandwidth filter, because it does not produce sufficient attenuation to the adjacent channel.

Columns 230 and 240 show an overlapping carrier aggregation (CA) from a network perspective and from a UE perspective respectively. Column 230 shows how the gNB may utilize the irregular channel bandwidth through CA to two UEs (UE1 and UE2). In this way the gNB may utilize the entire irregular channel bandwidth, but there is no UE benefit.

if the UE supports overlapping CA, column 240 shows that a UE will treat the overlapping CA as independent component carriers, same as done in non-contiguous intra-band CA, however it requires that the UE supports non-contiguous CA in low bands with a LO distance that is less than usually configured one (in contiguous intra-band and non-contiguous intra-band CA), and that the UE has ways to treat the overlapping segments or splitting the CCs at irregular bandwidth parts (BWP).

Column 250 shows how a UE may treat the irregular bandwidth without suffering from the adjacent channel. It supports the irregular bandwidth as one spectrum and not CA, and it may have channel filtration that supports the irregular spectrum. This approach does however require a more advanced receiver design than typically implemented in low bands.

As shown in FIG. 2, there are basically two ways to construct an irregular bandwidth, where the constructing is either through a combined- or wider channel bandwidth (Columns 220 and 250) or using overlapping carrier aggregation (Columns 230 and 240).

According to the comparison shown in FIG. 2, it is preferred that the entire configured irregular channel bandwidth may serve a single UE and there may be not necessary to use overlapping CA for complicating this constellation. However, a UE implementation complication should be taken into account for the combined channel bandwidth.

UE transceiver chipsets in cellular communication are often using direct down conversion in the receiver design. The receiver architecture converts a signal from the radio frequency carrier to a low intermediate frequency (IF) or zero IF. The receiver architecture uses analogue amplifiers, an analogue mixer, an analogue filter, an ADC, and a digital channel filter followed by demodulation.

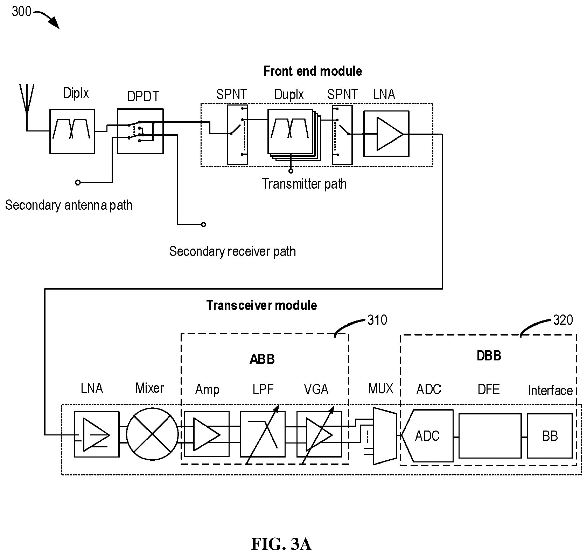

FIG. 3A illustrates a schematic graph of the receiver architecture 300 at a UE, with an analogue baseband (ABB) module 310 and a digital baseband (DBB) module 320.

The low pass filter (LPF) located within the ABB 310 of transceiver serves the purpose of attenuating the adjacent interference of the wanted signal (down-converted to zero-if at this point). This is the first instance in the UE receiver that filters in-band interference, of which the adjacent channel will have the highest input power level that can exceed even the wanted signal.

The ADC is configured to convert an analogue signal with an input power based on the wanted signal. It is to be understood that the level of the adjacent channel (or other in-band interferers) do not force the ADC into saturation, since a saturated ADC will increase the signal-to-noise and interference level.

The DBB 320 of the transceiver additionally includes a digital front-end (DFE) that has a digital filter that suppress out-of-channel interference further.

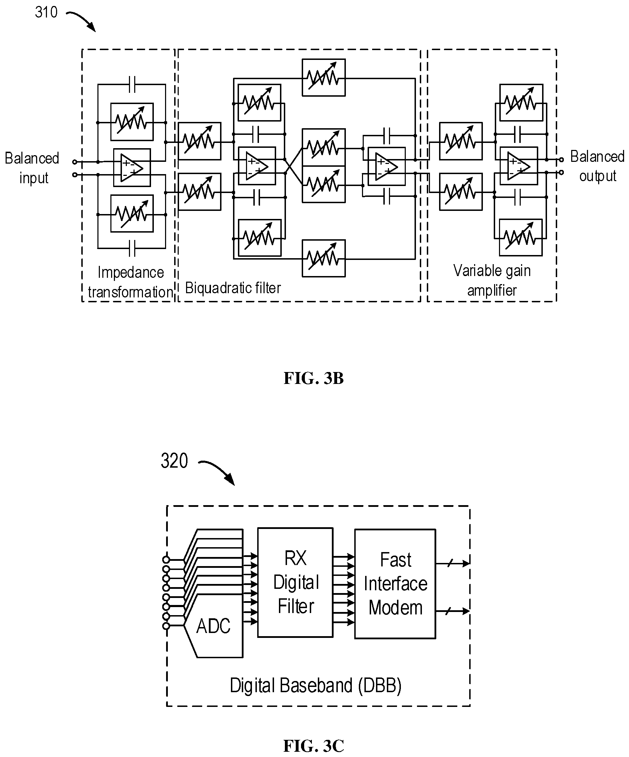

FIGS. 3B and 3C illustrate example implementations of the ABB 310 and the DBB 320 respectively. As shown in FIG. 3B, the analogue filter may be implemented as a Biquadratic (BQ) filter of which follows the Tow-Thomas design.

One challenge with utilizing irregular bandwidths is how to enable full and efficient use of the entire channel bandwidth. In particular, there may be challenges in how the UE designs and chooses its channel filter based on the transmission bandwidth configuration.

In the present disclosure, some embodiments will be described with reference to the terms "analogue filter" and "digital filter", the digital filter may be used to refer to a digital pre-filter or a digital pre-filter channel filter, which may be understood as being the first filter after the ADC. In the present disclosure, the term "channel bandwidth" may be interchangeable used with a term "bandwidth" and the present disclosure does not limit this aspect.

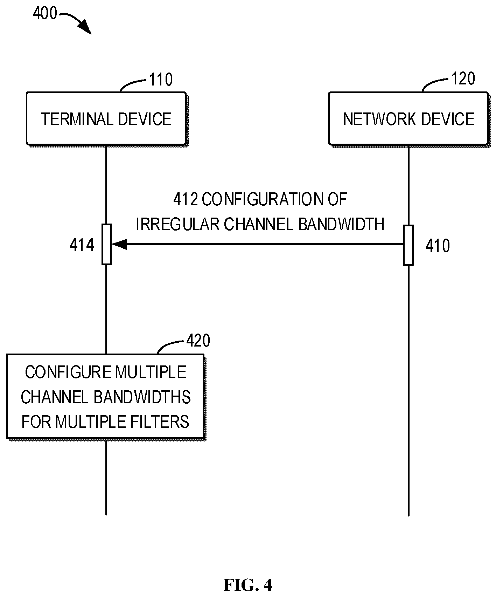

FIG. 4 illustrates an example of a process flow 400 in accordance with some example embodiments of the present disclosure. For the purpose of discussion, the process flow 400 will be described with reference to FIG. 1. The process flow 400 involves the terminal device 110 and the network device 120. It would be appreciated that although the process flow 400 has been described in the network environment 100 of FIG. 1, this process flow may be likewise applied to other communication scenarios.

The network device 120 transmits 410 a configuration of an irregular channel bandwidth 412 to the terminal device 110. In some example embodiments, the configuration may be transmitted by a radio resource control (RRC) message or RRC signalling.

In some examples, the configuration of the irregular channel bandwidth 412 may indicate a quantity (a total number) of physical resource blocks (PRBs) of the irregular channel bandwidth. In addition or alternatively, the configuration of the irregular channel bandwidth 412 may further indicate a subcarrier spacing (SCS).

In some implementations, the network device 120 may determine the irregular channel bandwidth for the terminal device 110 based on a capability of the terminal device 110. In addition or alternatively, the terminal device 110 may transmit capability information to the network device 120. On the other side of communication, the network device 120 may receive the capability information of the terminal device 110, and accordingly the irregular channel bandwidth may be determined based on the capability information of the terminal device 110.

The capability information may indicate that the terminal device 110 supports the use of an irregular channel bandwidth. In some examples, the capability information may indicate one or more of:
∘ whether the use of a next smaller bandwidth is supported or not (i.e. the use of a next smaller standard channel bandwidth compared to the irregular channel bandwidth - for example for a 7 MHz irregular channel bandwidth, the next smaller standard channel bandwidth is 5 MHz);
∘ whether the use of a next larger bandwidth is supported or not (i.e. the use of a next larger standard channel bandwidth compared to the irregular channel bandwidth - for example for a 7 MHz irregular channel bandwidth, the next larger standard channel bandwidth is 10 MHz);
∘ whether the use of one channel filter is supported or not; or
∘ whether the use of two channel filters is supported or not.

It should be understood that in some examples, the capability information may comprise other or further information than that provided above. For example, the terminal device 110 may have more advanced filters that can be applied.

In some examples, the terminal device 110 can indicate the capability information even in the case of standard channel bandwidths (e.g. 5 MHz or 10 MHz). This may be beneficial when large interference occurs on those bandwidths.

In some examples, the terminal device 110 may determine what information to include in the capability information. The decision may for example be based on experience with the network and actual use case. That is to say, the terminal device 110 may choose to present information that, based on previous experience with that network, makes sense, i.e., what makes the best possible performance.

In some examples, the decision of what information to include in the capability information may be based on one or more measurements performed by the terminal device 110. For example, the terminal device 110 may evaluate potential blocking and/or interfering signals associated with the irregular bandwidth and determine what information to include based on the evaluation of the blocking/interfering signals.

For instance, the terminal device 110 may be capable of supporting a channel filter on the lower edge of the channel bandwidth. However, the terminal device 110 may determine the presence of a blocking/interfering signal at the lower end of the channel bandwidth. The terminal device 110 may therefore determine to not signal it's capability of supporting a channel filter on the lower edge of the channel bandwidth to the network, as the terminal device 110 knows about a potential blocking/interfering signal on the lower frequency end. In this way, the terminal device 110 may try to prevent the network from potentially making a wrong choice (i.e., one with bad SNR profile), as the network may not know about the blocking/interfering signal, and may otherwise have selected a resource allocation that would be impacted by the blocking/interfering signal.

In some examples, the terminal device 110 may send, to the network device 120, assistance information or MAC CE to update the terminal device 110's filter capabilities dynamically while the terminal device 110 is in RRC active state.

In the present disclosure, a standard channel bandwidth may equal to a multiple of a minimum 3GPP 5GNR channel bandwidth. For example, the minimum 3GPP 5G NR channel bandwidth may be 5MHz or another value.

In the present disclosure, an irregular channel bandwidth does not equal to any multiple of the minimum 3GPP 5GNR channel bandwidth. For a specific irregular channel bandwidth, a next larger standard bandwidth of the irregular channel bandwidth refers to a minimum standard bandwidth larger than the irregular channel bandwidth, and a next smaller standard bandwidth of the irregular channel bandwidth refers to a maximum standard bandwidth smaller than the irregular channel bandwidth. The term "the next larger standard bandwidth" may also be called as a next broader standard bandwidth, and the term "the next smaller standard bandwidth" may also be called as a next narrower standard bandwidth.

Continue referring to FIG. 4, the terminal device 110 receives 414 the configuration of an irregular channel bandwidth 412. In addition, the terminal device 110 configures 420 multiple channel bandwidths of multiple filters based on the configuration of an irregular channel bandwidth 412. In some example embodiments, at least two of the multiple channel bandwidths are different.

The terminal device 110 may include multiple filters, which include a first filter and a second filter. For example, the first filter is an analogue filter and the second filter is a digital filter.

In some example embodiments, the terminal device 110 may configure the first filter to support the next smaller standard bandwidth of the irregular channel bandwidth. In other words, a first bandwidth for the first filter (such as the analogue filter) is the next smaller standard bandwidth. For example, if the irregular channel bandwidth is 6 or 7 MHz, then the first bandwidth for the first filter is 5 MHz. As such, there is no need to update the hardware or firmware of the first filter, the cost will be reduced.

In some example embodiments, the terminal device 110 may configure the second filter to support the next larger standard bandwidth of the irregular channel bandwidth. In other words, a second bandwidth for the second filter (such as the digital filter) is the next larger standard bandwidth. For example, if the irregular channel bandwidth is 6 or 7 MHz, then the second bandwidth for the second filter is 10 MHz. As such, there is no need to update the hardware or firmware of the second filter.

In some other example embodiments, the terminal device 110 may configure the second filter to support the irregular channel bandwidth. In other words, a second bandwidth for the second filter (such as the digital filter) is the irregular channel bandwidth. For example, if the irregular channel bandwidth is 6 or 7 MHz, then the second bandwidth for the second filter is 6 or 7 MHz. As such, only an update to the second filter is needed, so that the second filter (the digital filter) can support the irregular channel bandwidth.

In some examples, at least one of the multiple filters may be get updated. For example, the second filter may be updated based on a configuration of the multiple filters. For a specific example, a new hardware or firmware with dedicated irregular channel bandwidth digital filter may be utilized by the terminal device 110.

In addition or alternatively, the terminal device 110 may receive a signal affected by an adjacent channel interference. In some example embodiments, the terminal device 110 filters the adjacent channel interference by the first filter with the first bandwidth; and further filters the adjacent channel interference by the second filter with the second bandwidth.

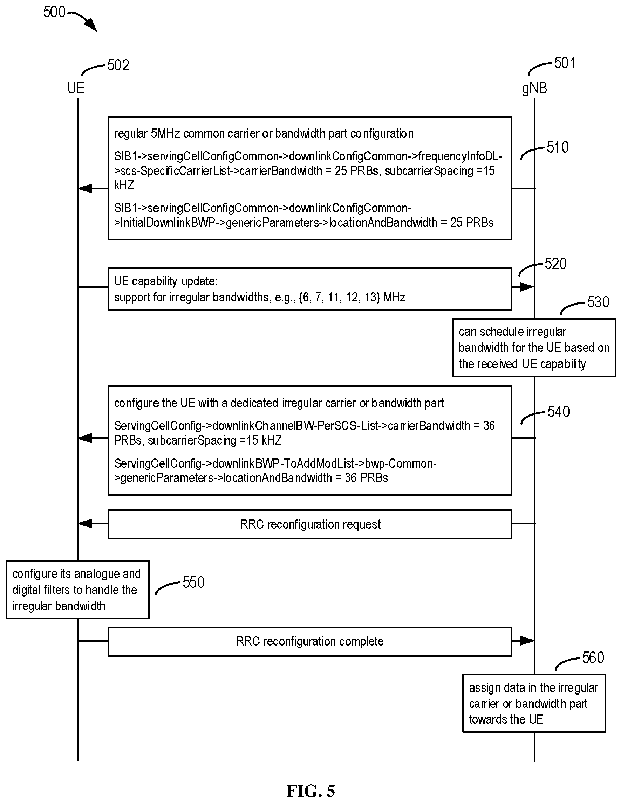

FIG. 5 illustrates an example of a process flow 500 of signalling in accordance with some example embodiments of the present disclosure. The flow 500 relates to a gNB 501 and a UE 502 as shown in FIG. 5.

At 510, the gNB 501 sends a regular 5MHz common carrier or bandwidth part configuration to the UE 502. For example, one of the following may be used to indicate the common carrier or bandwidth part configuration:
SIB1→servingCellConfigCommon→downlinkConfigCommon→frequencyInfoDL→ scs-SpecificCarrierList4carrierBandwidth = 25 PRBs, subcarrierSpacing =15 kHZ; or
SIB1→servingCellConfigCommon→downlinkConfigCommon→InitialDownlinkBWP→ genericParameters4locationAndBandwidth = 25 PRBs.

In some examples, the gNB 501 may broadcast the DL carrier bandwidth and the bandwidth of the initial BWP (BWP#0) in SIB1. For the 7MHz allocation, SIB1 would indicate DL standard channel bandwidth (i.e., 5 MHz), the initial DL BWP would be set to 5 MHz to accommodate legacy and new UEs.

At 520, the UE 502 sends the UE capability update information to the gNB 501. For example, the UE capability update information may indicate the supported irregular bandwidths, e.g., a set of {6, 7, 11, 12, 13} MHz.

At 530, the gNB 501 schedules irregular bandwidth for the UE 502 based on the received UE capability.

At 540, the gNB 501 configures the UE 502 with a dedicated irregular carrier or BWP. For example, one of the following may be used to indicate the dedicated carrier or bandwidth part configuration:
ServingCellConfig4downlinkChannelBW-PerSCS-List4carrierBandwidth = 36 PRBs, subcarrierSpacing =15 kHZ; or
ServingCellConfig→downlinkBWP-ToAddModList→bwp-Common->genericParameters->locationAndBandwidth = 36 PRBs.

It is to be understood that example shown in FIG. 5 assumes that 7MHz channel comprises 36 PRBs, however the number of PRBs for each irregular channel bandwidth may be another value, and the present disclosure does not limit this aspect.

The UE 502 supporting irregular bandwidths can indicate (at 530) support for the same using Capability signaling. Once the UE 502 established the RRC connection, the gNB 501 can account for these UE capabilities and re-configure (at 540) the UE 502 accordingly. At this point the gNB 501 may override the carrier bandwidth value that the UE 502 obtained from SIB1 and configure a dedicated BWP with a bandwidth that differs from the bandwidth of BWP#0. gNB 501 may configure (at 540) a larger bandwidth part that will cover the whole 7MHz allocation.

At 550, the UE 502 configures its analogue and digital filters to handle the irregular bandwidth. For example, the UE 502 will configure its filters according to the new irregular bandwidth during RRC_CONNECTED state and map the PRBs (36 PRBs proposed above) to the filter combination. For example, in the case of 36 PRBs, the UE 502 combines 5MHz analogue filter bandwidth with 10MHz digital filter bandwidth.

In some examples, the UE 502 may have updated software to interpret the PRBs of: *ServingCellConfig-> downlinkBWP-ToAddModList-> bwp-Common-> genericParameters-> locationAndBandwidth.* And the UE 502 may receive the update and map the filter configurations shown in Table 1 below.

**Table 1**

| | Digital Next Wider | | Digital Match | | RRC_CONNECTED (15kHz SCS) | RRC_CONNECTED (30kHz SCS) |
|---|---|---|---|---|---|---|
| Channel Bandwidth | Analogue BW | Digital BW | Analogue BW | Digital BW | SIB1 locationAnd Bandwidth | SIB1 locationAnd Bandwidth |
| 5 | 5 | 5 | 5 | 5 | 25 | 11 |
| 6 | **5** | **10** | **5** | **6** | 30 | 13 |
| 7 | **5** | **10** | **5** | **7** | 35 | 16 |
| 10 | 10 | 10 | 10 | 10 | 52 | 24 |
| 11 | **10** | **15** | **10** | **11** | 57 | 27 |
| 12 | **10** | **15** | **10** | **12** | 62 | 29 |
| 13 | **10** | **15** | **10** | **13** | 67 | 32 |

At 560, the gNB 501 assigns data in the irregular carrier or BWP towards the UE 502.

It is to be understood that since the number of PRBs of an irregular bandwidth may be varied, Table 1 shown above is only for illustration without any limitation. In some examples, in case the UE 502 has legacy analogue and digital hardware, it may follow the column of "Digital Next Wider" while configuring the filters, as shown at 550 in FIG. 5. However, if the UE 502 is updated with new digital filter coefficients, it may follow the column of "Digital Match".

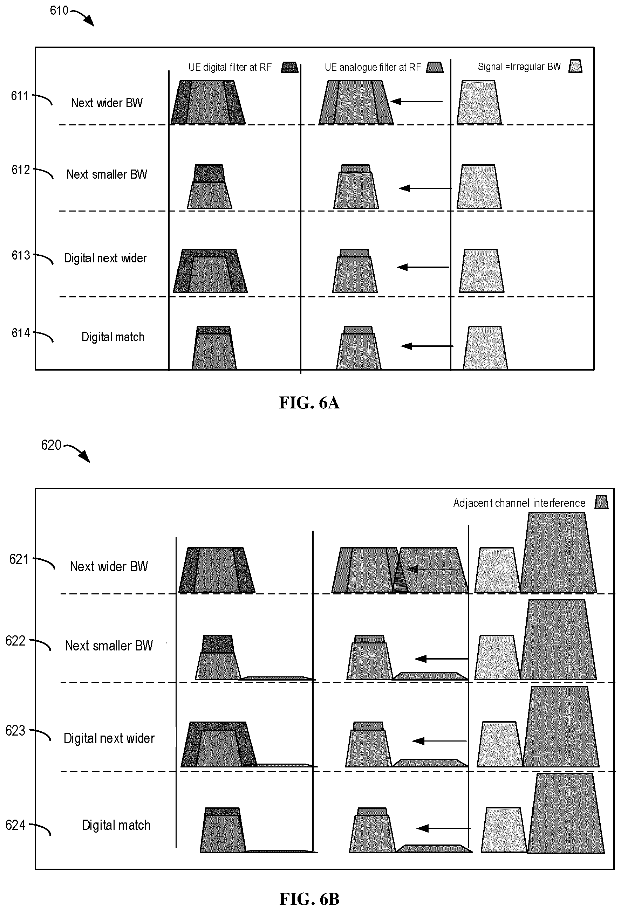

FIGS. 6A and 6B illustrate how a transceiver front-end with the receive chains may receive an irregular channel bandwidth without and with an adjacent channel interference respectively. FIG. 6A illustrates a comparison 610 of four approaches without an adjacent channel interference. FIG. 6B illustrates a comparison 620 of four approaches with an adjacent channel interference. Specifically, the approaches of "Digital next wider" and "Digital match" are proposed in the present disclosure.

The rows 611 and 621 show that the UE is configured for receiving with the analogue and digital filters for the next wider channel bandwidth.

The rows 612 and 622 show that the UE is configured for receiving with the analogue and digital filters for the next smaller channel bandwidth.

The rows 613 and 623 show one option of the present disclosure, where the analogue filter is kept at the next smaller standard channel bandwidth to suppress the adjacent channel, and the digital filter is kept at the next wider standard channel bandwidth allowing the BB data receiver to equalize the attenuated sub-carriers.

The rows 614 and 624 show another option of the present disclosure, where the analogue filter is kept at the next smaller standard channel bandwidth to suppress the adjacent channel, and the digital filter is updated with new filter coefficients so that the digital filter is matched to the actual irregular bandwidth of the received signal.

As shown in FIG. 6B, the adjacent channel is displaced further from the low pass cut off frequency when the irregular bandwidth exceeds the next smaller channel bandwidth, which in turn also brings significantly more attenuation to the interference within the adjacent channel.

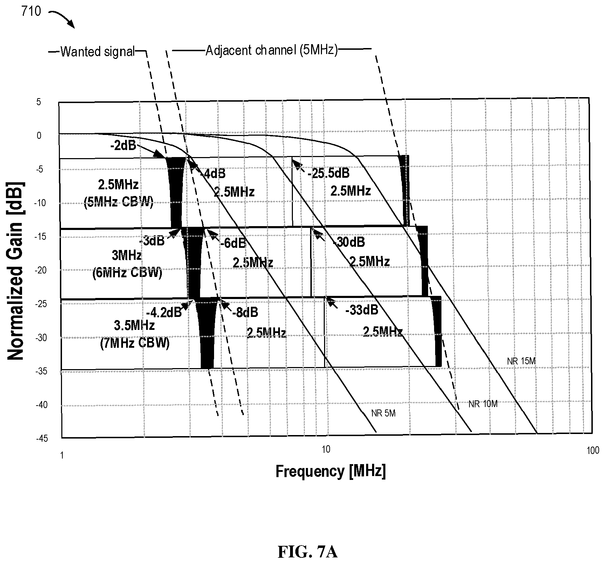

While applying the combined channel bandwidths on the filters (analogue and digital filters), FIG. 7A illustrates an example 710 of the highest amount of expected attenuation of the outer spectrum part of the wanted signal along with the increased suppression of the adjacent channel interference.

The attenuation of the analogue filter in a smaller channel bandwidth configuration is expected to reduce both the outer part of the wanted signal as well as the lower edge and upwards of the adjacent channel.

As shown in FIG. 7A, there will roughly be 2dB additional power reduction at the very edge subcarriers of the wanted signal in a 7MHz configuration compared to the edge of a 5MHz wanted signal.

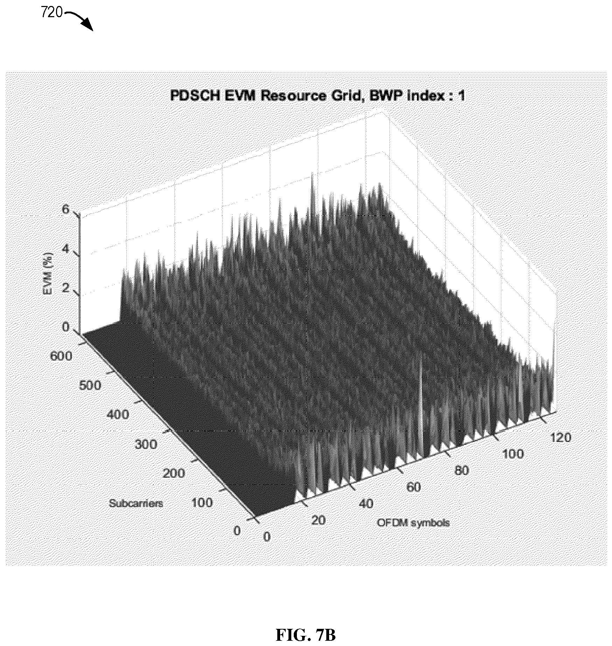

FIG. 7B illustrates an example 720 of the impact of the filter attenuation at the spectrum edges of the wanted signal. The impact is illustrated by plotting error vector magnitude (EVM) vs subcarriers for a standard 10 MHz signal (624 SCS), where the BW of the analogue baseband filter is 7.1 MHz, which is equivalent to a 7 MHz irregular BW signal filtered through a 5 MHz CBW filter.

As shown in FIG. 7B, the EVM is relatively low even at the edges of the spectrum, considering that the expected overall RMS EVM is more than 3% for a high quality wanted signal with a SINAD of 30 dB. Hence the expected impact on throughput is low even for high SINAD scenarios.

Based on the relatively small impact on EVM, the solution presented in the present disclosure of the filter configuration is very well suited for support of irregular channel bandwidths, when the analogue filter is configured as "Next smaller".

According to the embodiments with reference to FIGS. 4-7, a solution for irregular channel bandwidth support mechanism is proposed. In some embodiments, a terminal device may configure multiple bandwidths for multiple filters based on an irregular channel bandwidth, where at least two of the multiple bandwidths for the multiple filters are different. As such, the filter configurations at the terminal device may support the irregular channel bandwidths, even when the terminal device does not update the analog filters in hardware.

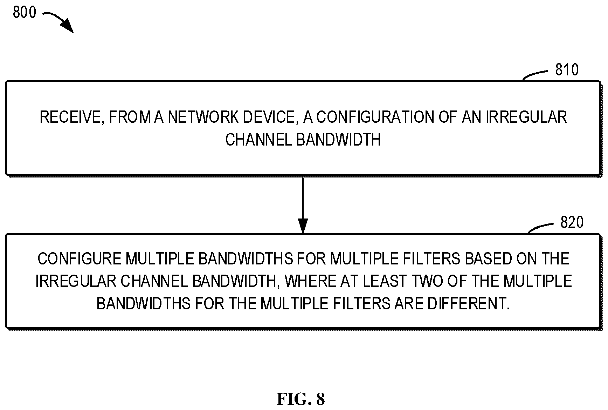

FIG. 8 illustrates a flowchart of a method 800 implemented at a terminal device in accordance with some example embodiments of the present disclosure. For the purpose of discussion, the method 800 will be described from the perspective of the terminal device 110 with reference to FIG. 1.

At block 810, the terminal device 110 receives, from a network device, a configuration of an irregular channel bandwidth. At block 820, the terminal device 110 configures multiple bandwidths for multiple filters based on the irregular channel bandwidth, where at least two of the multiple bandwidths for the multiple filters are different.

In some example embodiments, at least one of the multiple filters supports the multiple standard bandwidths.

In some example embodiments, each of the multiple standard bandwidths equals to a multiple of a minimum 3GPP 5G NR channel bandwidth. For example, each standard bandwidth equals to a multiple of 5MHz.

In some example embodiments, the multiple filters include a first filter and a second filter. In some example embodiments, a first bandwidth for the first filter is a next smaller standard bandwidth of the irregular channel bandwidth, and a second bandwidth for the second filter is not smaller than the irregular channel bandwidth.

In some example embodiments, the second bandwidth for the second filter is a next larger standard bandwidth of the irregular channel bandwidth.

In some example embodiments, the next larger standard bandwidth is a minimum standard bandwidth larger than the irregular channel bandwidth among the multiple standard bandwidths supported by the second filter.

In some example embodiments, the second bandwidth for the second filter is the irregular channel bandwidth.

In some example embodiments, the next smaller standard bandwidth is a maximum standard bandwidth smaller than the irregular channel bandwidth among the multiple standard bandwidths supported by the first filter.

In some example embodiments, the first filter includes an analogue filter, and the second filter includes a digital filter.

In some example embodiments, the terminal device 110 receives a signal with an adjacent channel interference. In some example embodiments, the terminal device 110 filters the adjacent channel interference by the first filter with the first bandwidth; and further filters the adjacent channel interference by the second filter with the second bandwidth.

In some example embodiments, the terminal device 110 gets updated based on a configuration of multiple filters. In some example embodiments, at least one of the multiple filters is updated to support the irregular channel bandwidth.

In some example embodiments, an apparatus capable of performing the method 800 (for example, the terminal device 110) may comprise means for performing the respective steps of the method 800. The means may be implemented in any suitable form. For example, the means may be implemented in a circuitry or software module.

In some example embodiments, the apparatus comprises: means for receiving, from a network device, a configuration of an irregular channel bandwidth; and means for configuring multiple bandwidths for multiple filters based on the irregular channel bandwidth, wherein at least two of the multiple bandwidths for the multiple filters are different.

In some example embodiments, at least one of the multiple filters supports multiple standard bandwidths. In some example embodiments, each of the multiple standard bandwidths equals to a multiple of a minimum 3GPP 5G NR channel bandwidth.

In some example embodiments, multiple filters comprise a first filter and a second filter, where a first bandwidth for the first filter is a next smaller standard bandwidth of the irregular channel bandwidth, and a second bandwidth for the second filter is not smaller than the irregular channel bandwidth.

In some example embodiments, the second bandwidth for the second filter is a next larger standard bandwidth of the irregular channel bandwidth.

In some example embodiments, the next larger standard bandwidth is a minimum standard bandwidth larger than the irregular channel bandwidth among multiple standard bandwidths supported by the second filter.

In some example embodiments, the second bandwidth for the second filter is the irregular channel bandwidth.

In some example embodiments, the next smaller standard bandwidth is a maximum standard bandwidth smaller than the irregular channel bandwidth among multiple standard bandwidths supported by the first filter.

In some example embodiments, the first filter comprises an analogue filter, and the second filter comprises a digital filter.

In some example embodiments, the apparatus comprises: means for receiving a signal with an adjacent channel interference; means for filtering the adjacent channel interference by the first filter with the first bandwidth; and means for further filtering the adjacent channel interference by the second filter with the second bandwidth.

In some example embodiments, the apparatus comprises: means for getting updated based on a configuration of the multiple of filters.

In some example embodiments, at least one of the multiple filters is updated to support the irregular channel bandwidth.

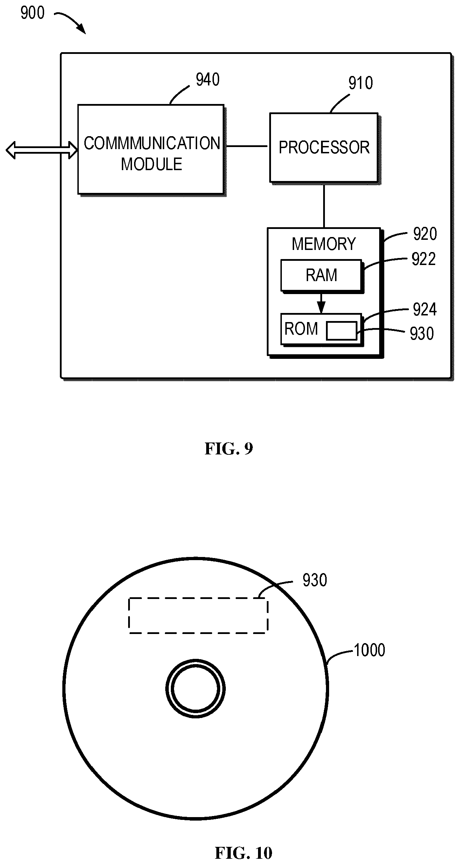

FIG. 9 illustrates a simplified block diagram of a device 900 that is suitable for implementing some example embodiments of the present disclosure. The device 900 may be provided to implement the communication device, for example the terminal device 110 as shown in FIG. 1. As shown, the device 900 includes one or more processors 910, one or more memories 920 coupled to the processor 910, and one or more communication modules 940 coupled to the processor 910.

The communication module 940 is for bidirectional communications. The communication module 940 has at least one antenna to facilitate communication. The communication interface may represent any interface that is necessary for communication with other network elements.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the ROM 924. The processor 910 may perform any suitable actions and processing by loading the program 930 into the RAM 922.

The embodiments of the present disclosure may be implemented by means of the program 930 so that the device 900 may perform any process of the disclosure as discussed with reference to FIGS. 4-8. The embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like.

FIG. 10 illustrates a block diagram of an example of a computer readable medium 1000 in accordance with some example embodiments of the present disclosure. The computer readable medium 1000 has the program 930 stored thereon. It is noted that although the computer readable medium 1000 is depicted in form of CD or DVD in FIG. 10, the computer readable medium 1000 may be in any other form suitable for carry or hold the program 930.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to any of FIGS. 4-8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
means for receiving, from a network device, a configuration of an irregular channel bandwidth; and
means for configuring a plurality of bandwidths for a plurality of filters based on the irregular channel bandwidth, wherein at least two of the plurality of bandwidths for the plurality of filters are different.

2. The terminal device of claim 1, wherein at least one of the plurality of filters supports a plurality of standard bandwidths.

3. The terminal device of claim 2, wherein each of the plurality of standard bandwidths equals to a multiple of a minimum the 3rd Generation Partnership Project (3GPP) the fifth generation (5G) new radio (NR) channel bandwidth.

4. The terminal device of any of claims 1-3, wherein the plurality of filters comprises a first filter and a second filter, and wherein a first bandwidth for the first filter is a next smaller standard bandwidth of the irregular channel bandwidth, and a second bandwidth for the second filter is not smaller than the irregular channel bandwidth.

5. The terminal device of claim 4, wherein the second bandwidth for the second filter is a next larger standard bandwidth of the irregular channel bandwidth.

6. The terminal device of claim 5, wherein the next larger standard bandwidth is a minimum standard bandwidth larger than the irregular channel bandwidth among a plurality of standard bandwidths supported by the second filter.

7. The terminal device of claim 4, wherein the second bandwidth for the second filter is the irregular channel bandwidth.

8. The terminal device of any of claims 4-7, wherein the next smaller standard bandwidth is a maximum standard bandwidth smaller than the irregular channel bandwidth among a plurality of standard bandwidths supported by the first filter.

9. The terminal device of any of claims 4-8, wherein the first filter comprises an analogue filter, and the second filter comprises a digital filter.

10. The terminal device of any of claims 4-9, wherein the terminal device is further configured to:
receive a signal with an adjacent channel interference;
filter the adjacent channel interference by the first filter with the first bandwidth; and
further filter the adjacent channel interference by the second filter with the second bandwidth.

11. The terminal device of any of claims 1-10, wherein the terminal device is further configured to:
get updated based on a configuration of the plurality of filters.

12. The terminal device of claim 11, wherein at least one of the plurality of filters is updated to support the irregular channel bandwidth.

13. A method comprising:
receiving, at a terminal device from a network device, a configuration of an irregular channel bandwidth; and
configuring, at the terminal device, a plurality of bandwidths for a plurality of filters based on the irregular channel bandwidth, wherein at least two of the plurality of bandwidths for the plurality of filters are different.

14. An apparatus comprising:
means for receiving, at a terminal device from a network device, a configuration of an irregular channel bandwidth; and
means for configuring, at the terminal device, a plurality of bandwidths for a plurality of filters based on the irregular channel bandwidth, wherein at least two of the plurality of bandwidths for the plurality of filters are different.

15. A computer program comprising computer-executable instructions for causing an apparatus to perform at least the method of claim 13.
